# EUROPÄISCHE PATENTANMELDUNG

(11) **EP 2 600 605 A1**
(43) Veröffentlichungstag der Anmeldung: **05.06.2013**
(21) Anmeldenummer: 12455006.2
(22) Anmeldetag: 06.11.2012
(51) Int. Cl.: H04N 1/48

(54) **Verfahren und eine Aufnahmevorrichtung zur Aufnahme von Multispektralbildern**

(30) Priorität: 30.11.2011 AT 17772011
(71) Anmelder: AIT Austrian Institute of Technology GmbH, 1220 Wien (AT)
(72) Erfinder: Mayer, Konrad, 1230 Wien (AT); Bodenstorfer, Ernst, 2345 Brunn am Gebirge (AT)
(74) Vertreter: Wildhack & Jellinek

(57) **Zusammenfassung**

Die Erfindung betrifft ein Verfahren zur Aufnahme von Farbbildern mit zumindest zwei spektralen Kanälen eines Gegenstands (7), insbesondere eines Druckwerks, wobei der Gegenstand (7) mit einer periodischen Abfolge von unterschiedlichen Beleuchtungsimpulsen beleuchtet wird, wobei das Licht sämtlicher Beleuchtungsimpulse spektrale Anteile in allen Farbkanälen aufweist, wobei für jeden Farbkanal zumindest zwei für diesen Farbkanal sensitive Zeilensensoren (1a, 1b, 1 c) zur Detektion von Licht dieses Farbkanals vorgesehen sind, wobei mit einem Zeilensensor (1a, 1b, 1c) allenfalls auch mehrere Farbkanäle detektierbar sind und detektiert werden, wobei der Gegenstand (7) relativ zu den Zeilensensoren bewegt wird und Zeilensensoren (1a, 1b, 1 c) auf den sich vorbei bewegenden Gegenstand (7) gerichtet sind, wobei die zeitliche Abfolge der Beleuchtungsimpulse und die Aufnahme von Zeilenbildern mit den Zeilensensoren (1a, 1b, 1c) synchronisiert wird und die Beleuchtung einer Gegenstandzeile (7a, 7b, 7c, 7d) und die Aufnahme gleichzeitig erfolgen, wobei die relative Bewegungsgeschwindigkeit derart eingestellt wird, dass während eines Beleuchtungsimpulses jeweils eine Gegenstandszeile (7a, 7b, 7c, 7d) des Gegenstands (7) auf jeweils einen der Zeilensensoren (1a, 1b, 1c) abgebildet wird, wobei im Zuge der Bewegung des Gegenstands (7) gegenüber dem Zeilensensor (1a, 1 b, 1 c) alle von der Gegenstandszeile (7a, 7b, 7c, 7d) des Gegenstands (7) erstellten Zeilenbilder ermittelt und gemeinsam als Farbbild abgespeichert und dem jeweiligen Farbkanal zugeordnet werden.

## Beschreibung

Die Erfindung betrifft ein Verfahren und eine Aufnahmevorrichtung zur Aufnahme von Multispektralbildern von Gegenständen gemäß dem Oberbegriff der unabhängigen Patentansprüche.

Im Stand der Technik gibt es bereits mehrere Verfahren, mit denen multispektrale Bilder erstellt werden können. Eine sehr aufwendige und teure Variante besteht darin, Kameras mit Prismen und Farbfiltern auszustatten, die eine aufgenommene Gegenstandszeile auf mehrere Sensoren mit unterschiedlicher Wellenlängenempfindlichkeit abbilden. Es besteht darüber hinaus auch noch die Möglichkeit, zusätzlich noch einen Sensor für einen infraroten Spektralanteil vorzusehen. Insgesamt ist ein derartiger Aufbau jedoch äußerst aufwendig, insbesondere in Hinblick auf die technischen Anforderung an das Prisma bzw. die Optik und den Bedarf an mehreren exakt ausgerichteten Sensorzeilen.

Eine andere Möglichkeit besteht darin, mehrere Zeilensensoren mit unterschiedlicher Farbsensitivität nebeneinander anzuordnen und den Gegenstand im Zuge seiner Bewegung relativ zu den Sensoren von unterschiedlichen Positionen aus aufzunehmen. Nachteilig an einem solchen Vorgehen ist, dass die Herstellung eines Zeilensensors sehr aufwendig ist und bei der Verwendung von mehreren Farbkanälen ein spezifisches und teuer herzustellendes Sensorlayout erforderlich ist, wobei das jeweilige Sensorlayout an die gewünschten Farbkanäle anzupassen ist. Ein nachträgliches Umrüsten der Aufnahmevorrichtung auf andere spektrale Farbkanäle ist somit unmöglich.

Wesentliches Problem aller bekannter Verfahren ist es, dass der Aufwand für die Erstellung von multispektralen Bildern mit der Anzahl der geforderten Farbkanäle unverhältnismäßig stark ansteigt. So ist beispielsweise die Konstruktion eines Prismas zur Trennung der spektralen Komponenten bei vier Farbkanälen wesentlich aufwendiger als bei drei Farbkanälen, sodass multispektrale Aufnahmen mit beispielsweise zehn Kanälen mit vernünftigem Aufwand nicht möglich sind.

Die Aufgabe der Erfindung ist es, ein einfaches Verfahren und eine einfache Vorrichtung zur Aufnahme von multispektralen Bildern zur Verfügung zu stellen. Die Erfindung löst diese Aufgabe bei einem Verfahren der eingangs genannten Art mit den Merkmalen des Kennzeichens des unabhängigen Patentanspruchs 1. Weiters löst die Erfindung diese Aufgabe bei einer Aufnahmevorrichtung der eingangs genannten Art mit den Merkmalen des unabhängigen Patentanspruchs 8.

Die Erfindung betrifft dabei ein Verfahren zur Aufnahme von Farbbildern eines Gegenstands, insbesondere eines Druckwerks, mit zumindest zwei spektralen Kanälen, wobei der Gegenstand mit einer periodischen Abfolge von unterschiedlichen Beleuchtungsimpulsen beleuchtet wird, wobei das Licht sämtlicher Beleuchtungsimpulse spektrale Anteile in allen Farbkanälen aufweist. Erfindungsgemäß ist vorgesehen, dass für jeden Farbkanal zumindest zwei für diesen Farbkanal sensitive Zeilensensoren zur Detektion von Licht dieses Farbkanals vorhanden sind, wobei mit einem Zeilensensor allenfalls auch mehrere Farbkanäle detektierbar sind und detektiert werden, wobei der Gegenstand relativ zu den Zeilensensoren bewegt wird und Zeilensensoren auf den sich vorbei bewegenden Gegenstand gerichtet sind, wobei die zeitliche Abfolge der Beleuchtungsimpulse und die Aufnahme von Zeilenbildern mit den Zeilensensoren synchronisiert wird und die Beleuchtung einer Gegenstandzeile und die Aufnahme gleichzeitig erfolgen, wobei die relative Bewegungsgeschwindigkeit derart eingestellt wird, dass während eines Beleuchtungsimpulses jeweils eine Gegenstandszeile des Gegenstands auf jeweils einen der Zeilensensoren abgebildet wird, wobei im Zuge der Bewegung des Gegenstands gegenüber dem Zeilensensor alle von der Gegenstandszeile des Gegenstands erstellten Zeilenbilder ermittelt und gemeinsam als Farbbild abgespeichert und dem jeweiligen Farbkanal zugeordnet werden.

Ein wesentlicher Vorteil besteht darin, dass mit einem einfach aufgebauten Sensor mit einem relativ einfachen Aufbau ein Multispektralbild mit einer beliebigen Anzahl von spektralen Kanälen erstellt werden kann. Die Erfindung kann mit mehrzeiligen monochromen Sensorarrays ausgeführt werden, die bei Flächenkameras in einer sehr großen Vielfalt zu günstigen Preisen zur Verfügung stehen. Erfindungsgemäß brauchen nur wenige Zeilensensoren ausgelesen werden, wodurch hohe Zeilenraten erzielt werden können.
Während Sensoren nur mit geringer spektraler Abgrenzung bzw. Schärfe zur Verfügung stehen, können Beleuchtungsmittel, etwa in Form von Leuchtdioden, in einer großen Vielzahl von Spektralkanälen von Ultraviolett bis Infrarot verwendet werden. Ein wesentlicher Vorteil gegenüber dem Stand der Technik liegt somit darin, dass der an die jeweiligen spektralen Kanäle anzupassende Verfahrensschritt von einer relativ günstigen Beleuchtungseinheit ausgeführt werden kann, während beim Stand der Technik eine Aufnahme mit einem an die jeweiligen spektralen Kanäle anzupassenden Sensor erforderlich wäre. Ein solcher Sensor könnte nicht ohne weiteres an die jeweiligen spektralen Kanäle angepasst werden sondern müsste je nach Anforderung ausgewechselt werden.

Somit ist es mit dem erfindungsgemäßen Verfahren bei geringem Kostenaufwand und hoher Flexibilität möglich, multispektrale Bilder zu erstellen.

Um eine besonders gute Abgrenzung einzelner spektraler Kanäle zu erhalten, kann vorgesehen sein, dass für jeden Farbkanal jeweils eine Beleuchtungseinheit vorgesehen ist, die Licht ausschließlich innerhalb dieses Farbkanals abgibt und zur Abgabe eines Beleuchtungsimpulses jeweils nur eine der Beleuchtungseinheiten aktiviert wird, und dass die Zeilensensoren für sämtliche der Kanäle sensitiv sind.

Um mit einfachen Mitteln bekannte Farbzeilenkameras für die Erfindung nutzbar zu machen, kann vorgesehen sein, dass eine erste Beleuchtungseinheit für eine Anzahl von, insbesondere sichtbaren, ersten Farbkanälen und eine weitere Beleuchtungseinheit für einen weiteren, insbesondere Infrarot-, Farbkanal abwechselnd aktiviert werden, und dass während der Beleuchtung mit der ersten Beleuchtungseinheit ein Farb-Zeilenbild mit einem Farb-Zeilensensor erstellt wird.

Um eine besonders einfache Steuerung zu erhalten und sämtliche spektralen Kanäle mit einer geringen Anzahl gleichartiger Sensoren aufnehmen zu können, kann vorgesehen sein, dass für jeden Farbkanal zumindest so viele Zeilensensoren vorhanden sind, wie eine periodische Abfolge Beleuchtungsimpulse umfasst.

Um die Messwerte von zur Verfügung stehenden Zeilensensoren möglichst vorteilhaft zu nutzen und zur Minimierung der Anzahl der erforderlichen Zeilensensoren kann vorgesehen sein, dass die Sensitivität der einzelnen Zeilensensoren und die Beleuchtungsimpulse jeweils derart ausgewählt werden, dass für jede erfasste Gegenstandszeile des Gegenstands jeweils für jeden Farbkanal ein Zeilenbild ermittelt wird.

Um das erfindungsgemäße Verfahren auf einem Flächensensor durchzuführen, kann vorgesehen sein, dass als Zeilensensoren die Zeilen eines Flächensensors mit rasterförmig angeordneten Pixelsensoren herangezogen werden, dass der Gegenstand in einer Bewegungsrichtung relativ zur Aufnahmeeinheit bewegt wird, sodass dieselbe Gegenstandszeile bei der Relativbewegung hintereinander auf die in derselben Sensorspalte liegenden Pixelsensoren nebeneinander liegender Zeilensensoren abgebildet wird.

Um Zeilensensoren, die Pixelsensoren mit mehreren Farbkanälen aufweisen, vorteilhaft einzusetzen, kann vorgesehen sein, dass zumindest ein Farbkanal mehrere Unterkanäle enthält, wobei für jeden Unterkanal jeweils ein separates Zeilenbild erstellt wird, wobei für sämtliche Pixelsensoren der Zeilensensoren jeweils die Helligkeitswerte von separaten dem Pixelsensor zugeordneten Teilpixelsensoren herangezogen werden, wobei jedem Pixelsensor jeweils ein Teilpixelsensor für jeden Unterkanal zugeordnet ist.

Weiters betrifft die Erfindung eine Aufnahmevorrichtung zur Aufnahme von Farbbildern eines Gegenstands mit zumindest zwei Farbkanälen, umfassend eine Anzahl von Lichtquellen zur Beleuchtung des Gegenstands, wobei das Licht sämtlicher Lichtquellen spektrale Anteile in allen Farbkanälen aufweist, für jeden Farbkanal zumindest zwei für diesen Farbkanal sensitive Zeilensensoren zur Detektion von Licht des Farbkanals, wobei mit einem Zeilensensor gegebenenfalls auch mehrere Farbkanäle detektierbar sind, eine Fördereinheit zur Bewegung des Gegenstands relativ zu den Zeilensensoren, die auf den sich vorbei bewegenden Gegenstand gerichtet sind, sowie eine Steuereinheit, die die Ansteuerung der Lichtquellen sowie der Zeilensensoren vornimmt und somit die zeitliche periodische Abfolge von Beleuchtungsimpulsen und die Aufnahme von Zeilenbildern mit den Zeilensensoren synchronisiert und die Beleuchtung und die gleichzeitige Aufnahme der Zeilenbilder vornimmt. Erfindungsgemäß ist bei dieser Aufnahmevorrichtung vorgesehen, dass die Steuereinheit die relative Bewegungsgeschwindigkeit derart einstellt, dass während eines Beleuchtungsimpulses jeweils eine Gegenstandszeile auf jeweils einen der Zeilensensoren abgebildet wird, wobei die Steuereinheit eine Speichereinheit aufweist. Im Zuge der Bewegung des Gegenstands gegenüber der Aufnahmeeinheit für alle von der Gegenstandszeile des Gegenstands erstellten Zeilenbilder Werte ermittelt und gemeinsam in einer Speichereinheit abspeichert und dem jeweiligen Farbkanal zuordnet.

Der Aufbau einer erfindungsgemäßen Aufnahmevorrichtung ist relativ einfach, wobei ein Multispektralbild mit einer beliebigen Anzahl von spektralen Kanälen erstellt werden kann. Als Zeilensensor kann ein Monochromsensor verwendet werden, solche Sensoren stehen etwa bei Flächenkameras in einer sehr großen Vielfalt zu günstigen Preisen zur Verfügung. Erfindungsgemäß brauchen nur wenige Zeilensensoren ausgelesen werden, wodurch hohe Zeilenraten bei der Aufnahme erzielt werden können.
Während Sensoren nur mit geringer spektraler Abgrenzung bzw. Schärfe zur Verfügung stehen, können Beleuchtungsmittel, etwa in Form von Leuchtdioden, in einer großen Vielzahl von Spektralkanälen von Ultraviolett bis Infrarot verwendet werden. Ein wesentlicher Vorteil gegenüber dem Stand der Technik liegt somit darin, dass eine Anpassung an andere spektrale Kanäle relativ kostengünstig durch eine Abwandlung der Beleuchtungseinheiten vorgenommen werden kann, während beim Stand der Technik ein Austausch des jeweiligen Sensors erforderlich wäre, da ein solcher Sensor nicht ohne weiteres an die jeweiligen spektralen Kanäle angepasst werden könnte.

Um eine besonders gute Abgrenzung einzelner spektraler Kanäle zu erhalten, kann vorgesehen sein, dass für jeden Farbkanal jeweils eine Beleuchtungseinheit vorgesehen ist, die Licht ausschließlich innerhalb dieses Farbkanals abgibt und die Steuereinheit zur Abgabe eines Beleuchtungsimpulses jeweils nur eine der Beleuchtungseinheiten aktiviert, wobei jeder der Zeilensensoren für sämtliche der Kanäle sensitiv ist.

Um mit einfachen Mitteln bekannte Farbzeilenkameras für die Erfindung nutzbar zu machen, kann vorgesehen sein, dass eine erste Beleuchtungseinheit für eine Anzahl von, insbesondere sichtbaren, ersten Farbkanälen und eine weitere Beleuchtungseinheit für einen weiteren, insbesondere Infrarot-, Farbkanal vorgesehen ist und die Steuereinheit die beiden Beleuchtungseinheiten abwechselnd aktiviert und während der Beleuchtung mit der ersten Beleuchtungseinheit ein Farb-Zeilenbild mit einem Farb-Zeilensensor erstellt.

Um eine besonders einfache Steuerung zu erhalten und sämtliche spektralen Kanäle mit einer geringen Anzahl gleichartiger Sensoren aufnehmen zu können, kann vorgesehen sein, dass für jeden Farbkanal zumindest so viele Zeilensensoren vorhanden sind, wie eine periodische Abfolge Beleuchtungsimpulse umfasst.

Um die Messwerte von zur Verfügung stehenden Zeilensensoren möglichst vorteilhaft zu nutzen und zur Minimierung der Anzahl der erforderlichen Zeilensensoren kann vorgesehen sein, dass die Sensitivität der einzelnen Zeilensensoren und die spektrale Lichtverteilung der Beleuchtungsimpulse jeweils derart ausgewählt ist, dass für jede erfasste Gegenstandszeile des Gegenstands jeweils für jeden Farbkanal ein Zeilenbild vorliegt.

Um das erfindungsgemäße Verfahren auf einem Flächensensor durchzuführen, kann vorgesehen sein, dass die Zeilensensoren als Zeilen eines Flächensensors mit rasterförmig angeordneten Pixelsensoren ausgebildet sind, dass die Fördereinheit die Richtung und die Geschwindigkeit des Gegenstands reguliert, sodass dieselbe Gegenstandszeile bei der Relativbewegung hintereinander auf die in derselben Sensorspalte liegenden Pixelsensoren nebeneinander liegender Zeilensensoren abgebildet sind.

Um Zeilensensoren, die Pixelsensoren mit mehreren Farbkanälen aufweisen, vorteilhaft einzusetzen, kann vorgesehen sein, dass zumindest ein Farbkanal mehrere Unterkanäle enthält, wobei jeder Pixelsensor eines jeden Zeilensensors für jeden der Unterkanäle einen für den jeweiligen Unterkanal sensitiven Teilpixelsensor aufweist, wobei gegebenenfalls zumindest einer der Teilpixelsensoren eines Pixelsensors für Licht eines weiteren Kanals sensitiv ist.

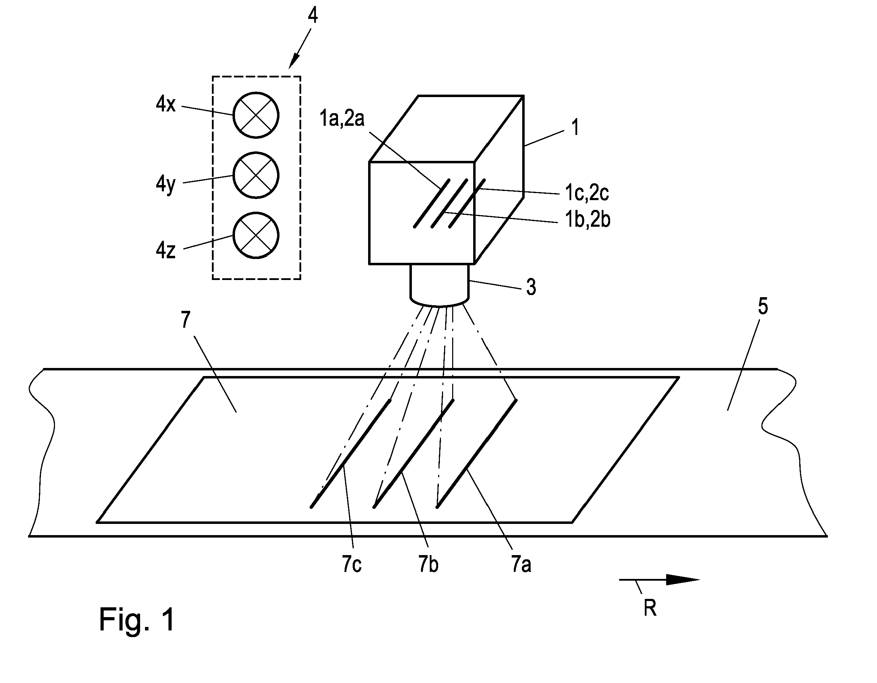

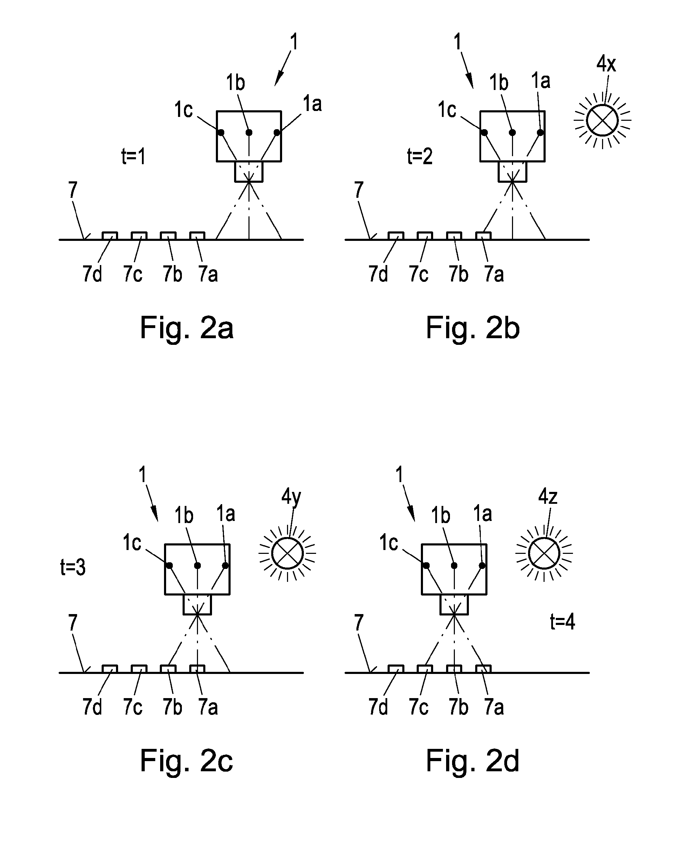

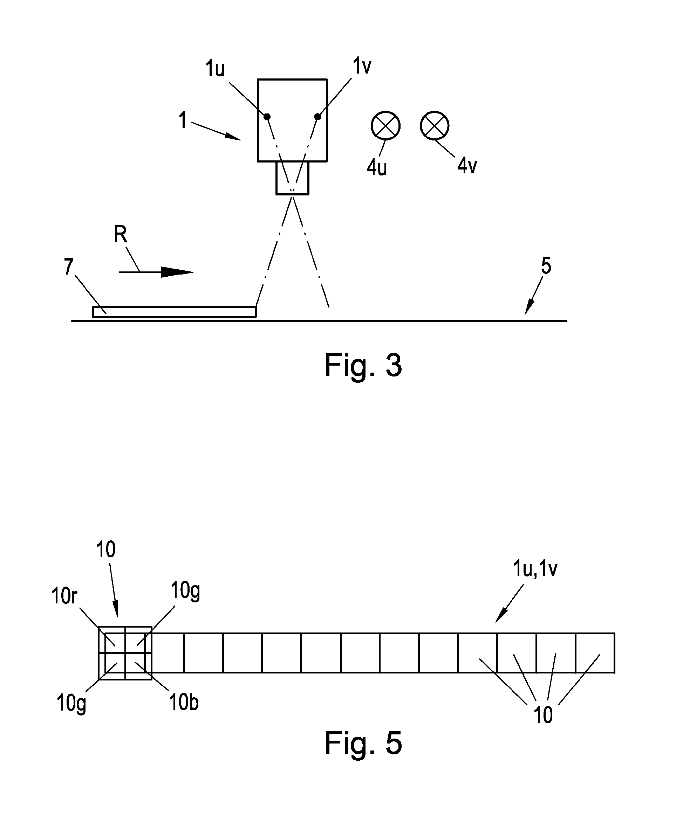

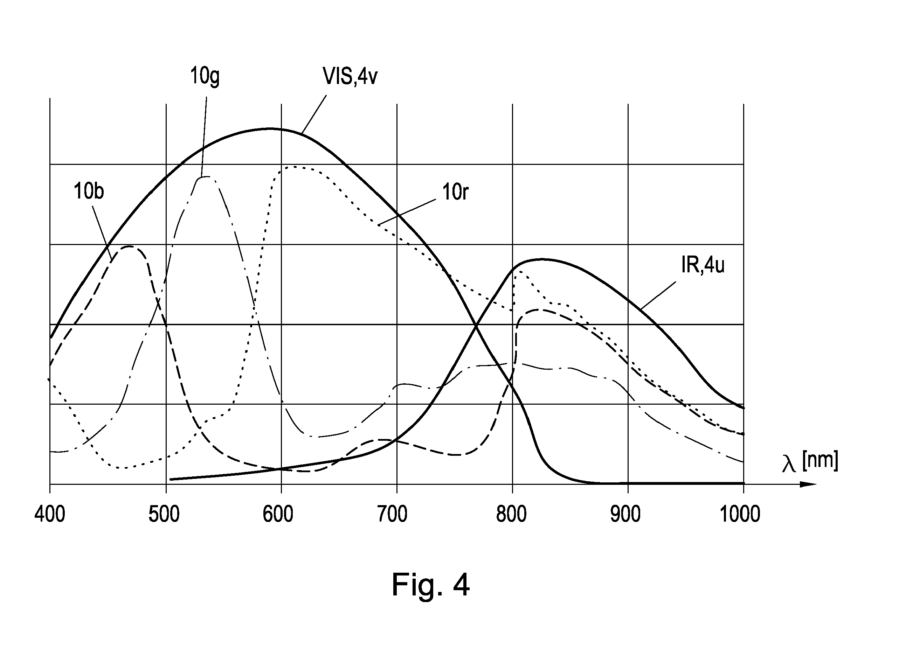

Zwei bevorzugte Ausführungsbeispiele der Erfindung sind anhand von Zeichnungsfiguren dargestellt. **Fig. 1** zeigt eine erste Ausführungsform einer Aufnahmevorrichtung. **Fig. 2a bis 2h** zeigen das Vorgehen bei der Aufnahme bei der in **Fig. 1** dargestellten Ausführungsform. **Fig. 3** zeigt eine zweite Ausführungsform einer Aufnahmevorrichtung. **Fig. 4** zeigt schematisch die Farbkanäle sowie die Sensitivität der einzelnen Zeilensensoren und Teilpixelsensoren. **Fig. 5** zeigt einen Zeilensensor der in **Fig. 3** dargestellten Aufnahmeeinrichtung.

**Fig. 1** zeigt eine bevorzugte Ausführungsform der Erfindung von der Seite. Die Aufnahmevorrichtung 1 verfügt über drei Zeilensensoren 1a, 1b, 1c mit jeweils einer Anzahl von Pixelsensoren 2a, 2b, 2c, eine Optik 3, eine Beleuchtungseinrichtung 4 und eine Fördereinheit 5. Im vorliegenden Fall umfasst die Beleuchtungseinrichtung 4 eine Anzahl von Lichtquellen 4x, 4y, 4z für eine Anzahl von Farbkanälen, wobei jede der Lichtquellen 4x, 4y, 4z jeweils einem Farbkanal entspricht und auf einen Bereich der Fördereinheit 5 gerichtet ist, der im Aufnahmebereich der Aufnahmevorrichtung liegt.

Die einzelnen Zeilensensoren sind im vorliegenden Ausführungsbeispiel Teil desselben Flächensensors. Jeweils eine Zeile des Flächensensors bildet einen Zeilensensor. Sofern der Flächensensor noch weitere Zeilen umfasst, werden diese nicht benutzt.

Im vorliegenden Ausführungsbeispiel wird für die erste Lichtquelle 4x rotes Licht, für die zweite Lichtquelle 4y grünes Licht und für die dritte Lichtquelle 4z blaues Licht verwendet. Die Zeilensensoren 1a, 1b, 1c sind für Licht sämtlicher Farbkanäle sensitiv. Sofern die Sensitivität der einzelnen Zeilensensoren 1a, 1b, 1c für unterschiedliche Wellenlängen voneinander abweicht, kann eine Kalibrierung für die einzelnen Farbkanäle vorgenommen werden.

Die Zeilensensoren 1a, 1b, 1c und die Optik sind derart ausgerichtet, dass die auf die Zeilensensoren 1a, 1b, 1c abgebildeten Gegenstandsbereiche 7a, 7b, 7c eines flachen Gegenstands 7, der mit der Fördereinheit 5 transportiert wird, insbesondere eines Druckwerks, normal zur Transportrichtung R oder in einem Winkel von mehr als 80° zur Transportrichtung R verläuft.

Während der Bewegung des Gegenstands 7 entlang der Transportrichtung R werden die einzelnen Gegenstandsbereiche des Gegenstands 7 von jedem der Zeilensensoren 1 a, 1b, 1c detektiert. Die Aufnahmeintervalle sind dabei derart eingestellt, dass derselbe Gegenstandsbereich des Gegenstands 7 zu unterschiedlichen Aufnahmezeitpunkten ausschließlich von jeweils einem der Zeilensensoren 1a, 1 b, 1 c aufgenommen wird.

Während der Bewegung des Gegenstands werden die Beleuchtungseinheiten synchron mit den Aufnahmen jeweils periodisch variiert. Es wird in einer vorgegebenen Reihenfolge jeweils eine der Lichtquellen 4x, 4y, 4z aktiviert, während die übrigen Lichtquellen deaktiviert werden.

Im Folgenden wird davon ausgegangen, dass die Geschwindigkeit des Gegenstands gegenüber den Zeilensensoren 1a, 1b, 1c jeweils gleich ist. Weiters sollen bei dieser vorteilhaften Ausführungsform der Erfindung Gegenstandsbereiche 7a, 7b, 7c, 7d aufgenommen werden, die zueinander einen vorgegebenen Abstand aufweisen. Üblicherweise haben die Gegenstandsbereiche 7a, 7b, 7c eine vorgegebene Breite und schließen aneinander unmittelbar an, sodass keine Zwischenbereiche zwischen den Gegenstandsbereichen 7a, 7b, 7c, 7d bestehen. In diesem Fall werden die Aufnahmezeitpunkte t, die den Beginn eines Aufnahmeintervalls beschreiben, in konstanten zeitlichen Abständen gewählt. Bei Vorliegen einer bekannten gleichbleibenden Geschwindigkeit kann nun durch Vorgabe von Aufnahmezeitpunkten t sichergestellt werden, dass sich die einzelnen Gegenstandsbereiche 7a, 7b, 7c, 7d bei aufeinander folgenden Aufnahmezeitpunkten im Aufnahmebereich von jeweils benachbarten Zeilensensoren 1a, 1b, 1c befinden.

Variiert die Geschwindigkeit des Gegenstands 7 oder sollen Aufnahmen von nicht äquidistant beabstandeten Gegenstandsbereichen 7a, 7b, 7c, 7d erstellt werden, so kann die gewünschte Aufnahme durch Auswahl entsprechender nicht äquidistanter Aufnahmezeitpunkte t durchgeführt werden.

**Fig. 2a bis 2h** zeigen die Bewegung eines Gegenstands 7 durch die Aufnahmevorrichtung. Der Gegenstand 7 weist mehrere Gegenstandsbereiche 7a, 7b, 7c, 7d auf. Bei sämtlichen Aufnahmeschritten werden jeweils Zeilenbilder der einzelnen Zeilensensoren 1a, 1b, 1c erstellt.

Zu einem ersten Zeitpunkt **(****Fig. 2a****)** befindet sich der Gegenstand 7 vollständig außerhalb des Aufnahmebereichs der Zeilensensoren 1a, 1b, 1 c.

Zu einem zweiten Zeitpunkt **(****Fig. 2b****)** wird der erste Gegenstandsbereich 7a des Gegenstands 7 auf den ersten Zeilensensor 1a abgebildet. Die erste Lichtquelle 4x wird aktiv gestellt.

Zu einem dritten Zeitpunkt **(****Fig. 2c****)** wird der erste Gegenstandsbereich 7a des Gegenstands 7 auf den zweiten Zeilensensor 1b abgebildet, der zweite Gegenstandsbereich 7b wird auf den ersten Zeilensensor 1a abgebildet. Die zweite Lichtquelle 4y wird aktiv gestellt, die erste Lichtquelle 4x wird inaktiv gestellt.

Zu einem vierten Zeitpunkt **(****Fig. 2d****)** wird der dritte Gegenstandsbereich 7c des Gegenstands 7 auf den ersten Zeilensensor 1a abgebildet. Der zweite Gegenstandsbereich 7b wird auf den zweiten Zeilensensor 1 b und der erste Gegenstandsbereich 7a wird auf den dritten Zeilensensor 1c abgebildet. Die dritte Lichtquelle 4z wird aktiv gestellt, die zweite Lichtquelle 4y wird inaktiv gestellt.

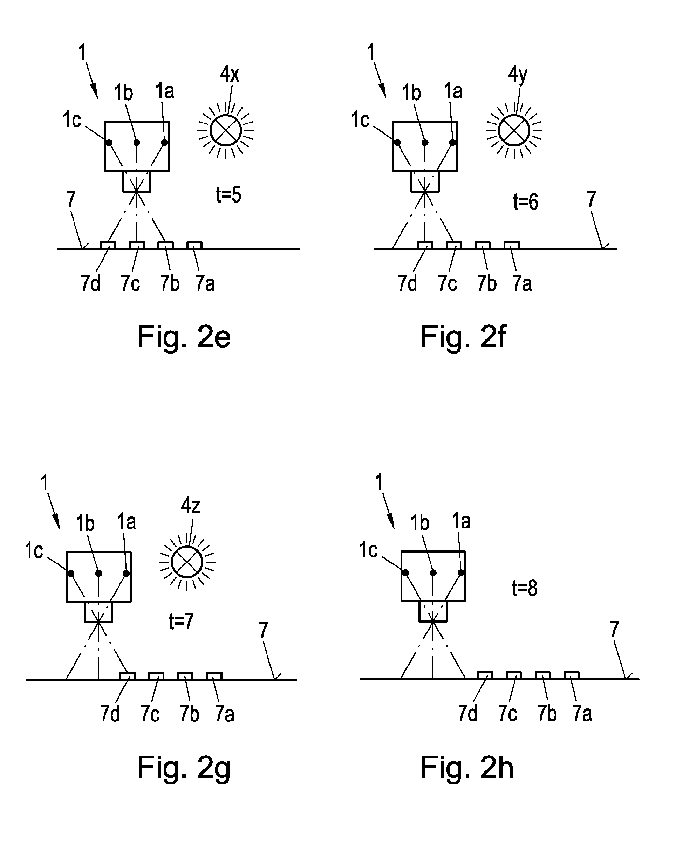

Zu einem fünften Zeitpunkt **(****Fig. 2e****)** wird der vierte Gegenstandsbereich 7d des Gegenstands 7 auf den ersten Zeilensensor 1 a abgebildet. Der dritte Gegenstandsbereich 7c wird auf den zweiten Zeilensensor 1 b und der zweite Gegenstandsbereich 7b wird auf den dritten Zeilensensor 1 c abgebildet. Der erste Gegenstandsbereich 7a wird nicht mehr auf die Zeilensensoren abgebildet. Die erste Lichtquelle 4x wird aktiv gestellt, die dritte Lichtquelle 4z wird inaktiv gestellt.

Zu einem sechsten Zeitpunkt **(****Fig. 2f****)** wird der vierte Gegenstandsbereich 7d des Gegenstands 7 auf den zweiten Zeilensensor 1b abgebildet. Der dritte Gegenstandsbereich 7c wird auf den dritten Zeilensensor 1 b abgebildet. Der zweite Gegenstandsbereich 7b wird nicht mehr auf die Zeilensensoren abgebildet. Die zweite Lichtquelle 4y wird aktiv gestellt, die erste Lichtquelle 4x wird inaktiv gestellt.

Zu einem siebten Zeitpunkt **(****Fig. 2g****)** wird der vierte Gegenstandsbereich 7d des Gegenstands 7 auf den dritten Zeilensensor 1 b abgebildet. Der dritte Gegenstandsbereich 7c wird nicht mehr auf die Zeilensensoren abgebildet. Die dritte Lichtquelle 4z wird aktiv gestellt, die zweite Lichtquelle 4y wird inaktiv gestellt.

Zu einem achten Zeitpunkt **(****Fig. 2h****)** wird keiner der Gegenstandsbereiche 7a, 7b, 7c, 7d auf die Zeilensensoren 1a, 1 b, 1 c abgebildet.

In der folgenden **Tabelle 1** werden die einzelnen Schritte bei der Aufnahme kurz zusammengefasst.

**Tabelle 1: Aufnahmeablauf**

| t | Zeilens. (1 a) | Zeilens. (1b) | Zeilens. (1c) | Lichtquelle aktiv | Fig. |
|---|---|---|---|---|---|
| 1 | | | | | Fig. 2a |
| 2 | 7a | | | 4x | Fig. 2b |
| 3 | 7b | 7a | | 4y | Fig. 2c |
| 4 | 7c | 7b | 7a | 4z | Fig. 2d |
| 5 | 7d | 7c | 7b | 4x | Fig. 2e |
| 6 | | 7d | 7c | 4y | Fig. 2f |
| 7 | | | 7d | 4z | Fig. 2g |
| 8 | | | | | Fig. 2h |

Aus dem in Tabelle 1 dargestellten Aufnahmeablauf wird klar, dass jede der Gegenstandszeilen 7a, 7b, 7c, 7d von jedem der Zeilensensoren 1a, 1b, 1c mit einer unterschiedlichen Farbbeleuchtung aufgenommen worden ist.

Um eine vollständige Farbinformation der ersten Gegenstandszeile 7a des Gegenstands 7 zu erhalten, können die folgenden Zeilenbilder herangezogen werden: Das zum zweiten Zeitpunkt mit dem ersten Zeilensensor 1 a ermittelte Bild wird für den Farbkanal der ersten Lichtquelle 4x, im vorliegenden Fall rotes Licht, herangezogen. Das zum dritten Zeitpunkt mit dem zweiten Zeilensensor 1b ermittelte Bild wird für den Farbkanal der zweiten Lichtquelle 4y, im vorliegenden Fall grünes Licht, herangezogen. Das zum vierten Zeitpunkt mit dem dritten Zeilensensor 1c ermittelte Bild wird für den Farbkanal der dritten Lichtquelle 4z, im vorliegenden Fall blaues Licht, herangezogen.

Die folgende **Tabelle 2** zeigt die für die einzelnen Gegenstandszeilen sowie für die einzelnen Farbkanäle heranzuziehenden Zeilenbilder:

**Tabelle 2: Zusammenstellung der Zeilenbilder**

| | 7a | 7b | 7c | 7d |
|---|---|---|---|---|
| 4x (rot) | 1a; t=2 | 1c; t=5 | 1 b; t=5 | 1a; t=5 |
| 4y (grün) | 1 b; t=3 | 1a; t=3 | 1c; t=6 | 1 b; t=6 |
| 4z (blau) | 1c; t=4 | 1 b; t=4 | 1 a; t=4 | 1c; t=7 |

Sofern die Anzahl der verwendeten Farbkanäle mindestens der Anzahl der verwendeten Zeilensensoren 1a, 1b, 1c entspricht und sich die Reihenfolge der Aktivierung der Beleuchtungseinheiten 4x, 4y, 4z für die einzelnen Farbkanäle periodisch ändert, kann bei bekannter Transportgeschwindigkeit mit diesem vorteilhaften Vorgehen für jeden Gegenstandsbereich 7a, 7b, 7c, 7d jeweils ein Zeilenbild für jeden Farbkanal erstellt werden. Da bei bekannter Transportgeschwindigkeit für jeden Gegenstandsbereich 7a, 7b, 7c, 7d bekannt ist, zu welchem Zeitpunkt t er auf die Zeilensensoren 1a, 1b, 1c abgebildet worden ist und für jeden Zeitpunkt t auch bekannt ist, welche Beleuchtungseinheit 4x, 4y, 4z gerade aktiv war, kann für jeden Gegenstandsbereich 7a, 7b, 7c, 7d ein Farbzeilenbild erstellt werden. Durch Zusammensetzen der einzelnen Farbzeilenbilder kann ein Farbbild erstellt werden, auf dem der Gegenstand 7 sichtbar ist.

Alternativ oder zusätzlich zu den bisher genannten Farbkanälen können auch weitere Farbkanäle im sichtbaren Licht oder im Infrarot oder im ultravioletten Bereich verwendet werden. Das gesamte interessierende Lichtspektrum kann dadurch mit geeigneten schmalbandigen Lichtquellen, vorzugsweise Leuchtdioden, Laserlicht, erfasst werden. Hierfür werden der Beleuchtungseinrichtung 4 für jeden Farbkanal jeweils weitere Lichtquellen 4v, 4w, ... hinzugefügt. Weiters ist es nicht unbedingt erforderlich, dass sämtliche Zeilensensoren 1a, 1b, 1c für sämtliche der Farbkanäle sensitiv sind. Es können zusätzlich auch weitere Zeilensensoren zur Verfügung gestellt werden. Es stehen mindestens so viele Zeilensensoren zur Verfügung wie Kanäle vorhanden sind.

Weiters bietet eine **zweite Ausführungsform** der Erfindung zusätzlich die Möglichkeit, dass einzelne Farbkanäle VIS in Unterkanäle R, G, B, unterteilt werden. Bei der zweiten Ausführungsform werden zwei Farbkanäle, nämlich ein Kanal VIS für sichtbares Licht und ein Kanal IR für infrarotes Licht verwendet, wobei der Kanal VIS für sichtbares Licht in drei Unterkanäle R, G, B unterteilt ist. **Fig. 4** zeigt die einzelnen Farbkanäle IR, VIS sowie die Unterkanäle R, G, B des Farbkanals für sichtbares Licht, wobei ein erster, roter Unterkanal R vorgesehen ist, der vorwiegend rote Farbanteile aufweist, ein zweiter, grüner Unterkanal G vorgesehen ist, der vorwiegend grüne Farbanteile aufweist und dritter, blauer Unterkanal B vorgesehen ist, der vorwiegend blaue Farbanteile aufweist.

Zur Beleuchtung stehen, wie in **Fig. 3** dargestellt, eine weiße Lichtquelle 4v und eine infrarote Lichtquelle 4u zur Verfügung, deren Farbspektrum in **Fig. 4** dargestellt ist. Zur Aufnahme von Zeilenbildern stehen zwei Zeilensensoren 1 u, 1v zur Verfügung, von denen jeder sowohl sensitiv für sichtbares Licht als auch für infrarotes Licht ist. Jeder Pixelsensor 10 der Zeilensensoren 1 u, 1v umfasst jeweils vier Teilpixelsensoren 10r, 10g, 10b **(****Fig. 5****),** von denen einer den Anteil von rotem, zwei den Anteil von grünem und einer den Anteil von blauem Licht zurückliefern. Darüber hinaus kann mit allen Teilpixelsensoren 10r, 10g, 10b Licht im Bereich des Infrarot-Kanals detektiert werden.

Es ist insgesamt vorteilhaft, für sichtbares und infrarotes Licht jeweils eine Doppelzeile mit einem Bayer-Pattern zu verwenden. Solche Zeilensensoren 1u, 1v werden in vielen Varianten am Markt als Flächensensoren angeboten. Von einem Flächensensor können jeweils zwei Doppelzeilen herangezogen werden, die jeweils als Zeilensensor fungieren. Die übrigen Doppelzeilen des Flächensensors werden nicht verwendet.

Wie aus **Fig. 4** ersichtlich, sind sämtliche Teilpixelsensoren 10r, 10g, 10b auch im Bereich des infraroten Lichts und im Infrarot-Kanal IR durchlässig, sodass mit diesen Sensoren auch infrarotes Licht detektierbar ist. Im vorliegenden Fall können die vier Teilpixelsensoren 10r, 10g, 10b eines Pixelsensors 10 addiert oder gewichtet werden, um einen Helligkeitswert für den Infrarot-Kanal IR zu erhalten.

Während der Aufnahme des Gegenstands wird der Gegenstand 7, wie auch beim ersten Ausführungsbeispiel der Erfindung an der Aufnahmevorrichtung 1 vorbei bewegt, wobei abwechselnd in periodischen Abständen eine Umschaltung der beiden Lichtquellen 1 u, 1v erfolgt. Die zeitliche Abfolge der von den Lichtquellen 1u, 1v abgegebenen Beleuchtungsimpulse wird mit der Aufnahme von Zeilenbildern mit den Zeilensensoren 1a, 1b, 1c synchronisiert, wobei die relative Bewegungsgeschwindigkeit des Gegenstands 7 gegenüber der Aufnahmeeinheit 1 derart eingestellt wird, dass während eines Beleuchtungsimpulses jeweils eine Gegenstandszeile 7a, 7b, 7c, 7d auf jeweils einen der Zeilensensoren 1 u, 1 v abgebildet wird.

Während eines ersten Abbildungsschritts befindet sich eine Gegenstandszeile 7a im Aufnahmebereich des ersten Zeilensensors 1u, wobei die weiße Lichtquelle 1v aktiviert wird. Es werden die einzelnen Signale der Teilpixelsensoren 10r, 10g, 10b jeweils zu Zeilenbildern zusammengesetzt, wobei jedem Unterkanal der Gegenstandszeile 7a das jeweilige Zeilenbild zugeordnet wird. Die Zeilenbilder werden für die weitere Verarbeitung zur Verfügung gehalten.

Beim zweiten Abbildungsschritt befindet sich die Gegenstandszeile 7a im Aufnahmebereich des zweiten Zeilensensors 1 u, die zweite Gegenstandszeile 7b befindet sich im Aufnahmebereich des ersten Zeilensensors 1v. Die weiße Lichtquelle 4v wird deaktiviert, die infrarote Lichtquelle 4u wird aktiv gestellt. Es werden die Helligkeitsinformationen der roten oder grünen oder blauen Teilpixelsensoren 10r, 10g, 10b herangezogen, da diese Teilpixelsensoren 10r, 10g und 10b auch für infrarotes Licht sensitiv sind. Aus den so erlangten Helligkeitsinformationen des ersten und zweiten Zeilensensors 1 u, 1v wird ein Zeilenbild erstellt, das dem infraroten Kanal der jeweiligen Gegenstandszeile 7a, 7b zugeordnet wird.

Anschließend wird in einem dritten Abbildungsschritt, bei dem sich die zweite und dritte Gegenstandszeile 7b, 7c im Aufnahmebereich der Zeilensensoren 1u, 1v befinden, eine Farbaufnahme wie beim ersten Abbildungsschritt durchgeführt, wobei eine Beleuchtung mit der weißen Lichtquelle 1v stattfindet. Die Zeilenbilder aller Teilpixelsensoren 10r, 10g, 10b werden, wie im ersten Abbildungsschritt, den Unterkanälen der jeweiligen abgegbildeten Gegenstanszeilen 7b, 7c zugeordnet.

Es werden weitere Abbildungsschritte vorgenommen, wobei sowohl die Beleuchtung zwischen weiß und infrarot abwechselt als auch die jeweiligen Verarbeitungsschritte, wie oben dargestellt, periodisch und alternierend vorgenommen werden.

Jeder Gegenstandszeile des Gegenstands 7 wird für jeden Kanal jeweils ein Zeilenbild zugeordnet. Es kann somit für jeden Gegenstand 7 durch Zusammensetzen der einzelnen Zeilenbilder eines Farbkanals zu einem Flächenbild eines Farbkanals und durch Überlagerung der Flächenbilder der Farbkanäle ein Spektralbild erstellt werden, das für die weitere Verarbeitung zur Verfügung gehalten wird und abrufbar ist.

Um eine Sensitivität des erfindungsgemäßen Verfahrens für die einzelnen Farbkanäle zu erhalten, weist das gemeinsam von allen Beleuchtungsimpulsen abgegebene Licht spektrale Anteile in allen diesen Farbkanälen auf. Es ist hingegen nicht erforderlich, dass jeder einzelne Beleuchtungsimpuls für sich spektrale Anteile in allen Farbkanälen besitzt, solange das Licht sämtlicher Beleuchtungsimpulse in ihrer Gesamtheit spektrale Anteile in allen Farbkanälen aufweist. So zeigt etwa Fig. 4, dass das gemeinsam von allen Lichtquellen 4u, 4v abgegebene Licht spektrale Anteile in allen Farbkanälen der einzelnen Zeilensensoren 10b, 10g, 10r, IR aufweist. Der Beleuchtungsimpuls VIS, 4v der Lichtquelle für sichtbares Licht weist beispielsweise nur Anteile im sichtbaren Licht, jedoch keinen Anteil im infraroten Licht auf. Umgekehrt weist der Beleuchtungsimpuls der Lichtquelle für infrarotes Licht einen verschwindend geringen spektralen Anteil im sichtbaren Licht auf.

Auch bei der ersten Ausführungsform der Erfindung ist es selbstverständlich nicht erforderlich, dass jede einzelne Lichtquelle für sich 4x, 4y, 4z spektrale Anteile in allen Farbkanälen aufweist. Vielmehr reicht es auch in diesem Ausführungsbeispiel der Erfindung vollkommen aus, dass das gemeinsame Licht sämtlicher Beleuchtungsimpulse zusammen spektrale Anteile in allen Farbkanälen aufweist.

## Patentansprüche

1. Verfahren zur Aufnahme von Farbbildern mit zumindest zwei spektralen Kanälen eines Gegenstands (7), insbesondere eines Druckwerks,
- wobei der Gegenstand (7) mit einer periodischen Abfolge von unterschiedlichen Beleuchtungsimpulsen beleuchtet wird, wobei das Licht sämtlicher Beleuchtungsimpulse spektrale Anteile in allen Farbkanälen aufweist,
- wobei für jeden Farbkanal zumindest zwei für diesen Farbkanal sensitive Zeilensensoren (1a, 1b, 1 c) zur Detektion von Licht dieses Farbkanals vorgesehen sind, wobei mit einem Zeilensensor (1a, 1b, 1c) allenfalls auch mehrere Farbkanäle detektierbar sind und detektiert werden,
- wobei der Gegenstand (7) relativ zu den Zeilensensoren bewegt wird und Zeilensensoren (1a, 1b, 1c) auf den sich vorbei bewegenden Gegenstand (7) gerichtet sind,
- wobei die zeitliche Abfolge der Beleuchtungsimpulse und die Aufnahme von Zeilenbildern mit den Zeilensensoren (1a, 1 b, 1c) synchronisiert wird und die Beleuchtung einer Gegenstandzeile (7a, 7b, 7c, 7d) und die Aufnahme gleichzeitig erfolgen,
- wobei die relative Bewegungsgeschwindigkeit derart eingestellt wird, dass während eines Beleuchtungsimpulses jeweils eine Gegenstandszeile (7a, 7b, 7c, 7d) des Gegenstands (7) auf jeweils einen der Zeilensensoren (1 a, 1 b, 1 c) abgebildet wird,
- wobei im Zuge der Bewegung des Gegenstands (7) gegenüber dem Zeilensensor (1a, 1b, 1c) alle von der Gegenstandszeile (7a, 7b, 7c, 7d) des Gegenstands (7) erstellten Zeilenbilder ermittelt und gemeinsam als Farbbild abgespeichert und dem jeweiligen Farbkanal zugeordnet werden.

2. Verfahren nach Anspruch 1, **dadurch gekennzeichnet, dass** für jeden Farbkanal (R, G, B, VIS, IR) jeweils eine Beleuchtungseinheit (4x, 4y, 4z; 4u, 4v) vorgesehen ist, die Licht ausschließlich innerhalb dieses Farbkanals (R, G, B, VIS, IR) abgibt und zur Abgabe eines Beleuchtungsimpulses jeweils nur eine der Beleuchtungseinheiten (4x, 4y, 4z, 4u, 4v) aktiviert wird, und dass die Zeilensensoren (1a, 1b, 1c; 1u, 1v) für sämtliche der Kanäle sensitiv sind.

3. Verfahren nach Anspruch 1, **dadurch gekennzeichnet, dass** eine erste Beleuchtungseinheit (4v) für eine Anzahl von, insbesondere sichtbaren, ersten Farbkanälen (VIS) und eine weitere Beleuchtungseinheit (4u) für einen weiteren, insbesondere Infrarot-, Farbkanal (IR) abwechselnd aktiviert werden, und dass während der Beleuchtung mit der ersten Beleuchtungseinheit (4v) ein Farb-Zeilenbild mit einem Farb-Zeilensensor (1 u, 1 v) erstellt wird.

4. Verfahren nach einem der vorangehenden Ansprüche, **dadurch gekennzeichnet, dass** für jeden Farbkanal zumindest so viele Zeilensensoren (1a, 1b, 1c; 1u, 1v) vorhanden sind, wie eine periodische Abfolge Beleuchtungsimpulse umfasst.

5. Verfahren nach einem der vorangehenden Ansprüche, **dadurch gekennzeichnet, dass** die Sensitivität der einzelnen Zeilensensoren (1a, 1b, 1c; 1u, 1v) und die Beleuchtungsimpulse jeweils derart ausgewählt werden, dass für jede erfasste Gegenstandszeile (7a, 7b, 7c, 7d) des Gegenstands (7) jeweils für jeden Farbkanal (R, G, B, VIS, IR) ein Zeilenbild ermittelt wird.

6. Verfahren nach einem der vorangehenden Ansprüche, **dadurch gekennzeichnet, dass** als Zeilensensoren (1 a, 1b, 1c; 1 u, 1v) die Zeilen eines Flächensensors mit rasterförmig angeordneten Pixelsensoren (10; 2a, 2b, 2c) herangezogen werden, dass der Gegenstand (7) in einer Bewegungsrichtung relativ zur Aufnahmeeinheit (1) bewegt wird, sodass dieselbe Gegenstandszeile (7a, 7b, 7c, 7d) bei der Relativbewegung hintereinander auf die in derselben Sensorspalte liegenden Pixelsensoren (10; 2a, 2b, 2c) nebeneinander liegender Zeilensensoren (1 a, 1b, 1 c) abgebildet wird.

7. Verfahren nach einem der vorangehenden Ansprüche, **dadurch gekennzeichnet, dass** zumindest ein Farbkanal (VIS) mehrere Unterkanäle (R, G, B) enthält, wobei für jeden Unterkanal jeweils ein separates Zeilenbild erstellt wird, wobei für sämtliche Pixelsensoren (10; 2a, 2b, 2c) der Zeilensensoren (1 a, 1 b, 1 c) jeweils die Helligkeitswerte von separaten dem Pixelsensor (10; 2a, 2b, 2c) zugeordneten Teilpixelsensoren (10r, 10g, 10b) herangezogen werden, wobei jedem Pixelsensor (10; 2a, 2b, 2c) jeweils ein Teilpixelsensor (10r 10g, 10b) für jeden Unterkanal (R, G, B) zugeordnet ist.

8. Verfahren nach einem der vorangehenden Ansprüche, **dadurch gekennzeichnet, dass** das gemeinsame Licht sämtlicher Beleuchtungsimpulse zusammen spektrale Anteile in allen Farbkanälen aufweist.

9. Aufnahmevorrichtung zur Aufnahme von Farbbildern eines Gegenstands (7) mit zumindest zwei Farbkanälen, umfassend
- eine Anzahl von Lichtquellen (4; 4u, 4v) zur Beleuchtung des Gegenstands (7), wobei das Licht sämtlicher Lichtquellen (4) spektrale Anteile in allen Farbkanälen (R, G, B, VIS, IR) aufweist,
- für jeden Farbkanal (R, G, B, VIS, IR) zumindest zwei für diesen Farbkanal (R, G, B, VIS, IR) sensitive Zeilensensoren (1a, 1b, 1c; 1u, 1v) zur Detektion von Licht des Farbkanals (R, G, B, VIS, IR), wobei mit einem Zeilensensor (1a, 1b, 1c) gegebenenfalls auch mehrere Farbkanäle (R, G, B, VIS, IR) detektierbar sind,
- eine Fördereinheit (5) zur Bewegung des Gegenstands (7) relativ zu den Zeilensensoren, die auf den sich vorbei bewegenden Gegenstand (7) gerichtet sind, sowie
- eine Steuereinheit, die die Ansteuerung der Lichtquellen (4) sowie der Zeilensensoren (1a, 1 b, 1c) vornimmt und somit die zeitliche periodische Abfolge von Beleuchtungsimpulsen und die Aufnahme von Zeilenbildern mit den Zeilensensoren (1a, 1b, 1c) synchronisiert und die Beleuchtung und die gleichzeitige Aufnahme der Zeilenbilder vornimmt,
- wobei die Steuereinheit die relative Bewegungsgeschwindigkeit derart einstellt, dass während eines Beleuchtungsimpulses jeweils eine Gegenstandszeile (7a, 7b, 7c, 7d) auf jeweils einen der Zeilensensoren (1a, 1 b, 1 c) abgebildet wird, und
- wobei die Steuereinheit eine Speichereinheit aufweist und im Zuge der Bewegung des Gegenstands (7) gegenüber der Aufnahmeeinheit (1) für alle von der Gegenstandszeile (7a, 7b, 7c, 7d) des Gegenstands (7) erstellten Zeilenbilder Werte ermittelt und gemeinsam in einer Speichereinheit abspeichert und dem jeweiligen Farbkanal zuordnet.

10. Aufnahmevorrichtung nach Anspruch 9, **dadurch gekennzeichnet, dass** für jeden Farbkanal jeweils eine Beleuchtungseinheit (4x, 4y, 4z) vorgesehen ist, die Licht ausschließlich innerhalb dieses Farbkanals (R, G, B) abgibt und die Steuereinheit zur Abgabe eines Beleuchtungsimpulses jeweils nur eine der Beleuchtungseinheiten (4x, 4y, 4z) aktiviert, wobei jeder der Zeilensensoren (1a, 1b, 1c) für sämtliche der Kanäle (R, G, B) sensitiv ist.

11. Aufnahmevorrichtung nach Anspruch 9 oder 10, **dadurch gekennzeichnet, dass** eine erste Beleuchtungseinheit (4v) für eine Anzahl von, insbesondere sichtbaren, ersten Farbkanälen (VIS; R, G, B) und eine weitere Beleuchtungseinheit (4u) für einen weiteren, insbesondere Infrarot-, Farbkanal (VIS, IR) vorgesehen ist und die Steuereinheit die beiden Beleuchtungseinheiten (4u, 4v) abwechselnd aktiviert und während der Beleuchtung mit der ersten Beleuchtungseinheit (4v) ein Farb-Zeilenbild mit einem Farb-Zeilensensor (1) erstellt.

12. Aufnahmevorrichtung nach einem der Ansprüche 8 bis 10, **dadurch gekennzeichnet, dass** für jeden Farbkanal (VIS, IR) zumindest so viele Zeilensensoren (1) vorhanden sind, wie eine periodische Abfolge Beleuchtungsimpulse umfasst.

13. Aufnahmevorrichtung nach einem der Ansprüche 8 bis 11, **dadurch gekennzeichnet, dass** die Sensitivität der einzelnen Zeilensensoren (1) und die spektrale Lichtverteilung der Beleuchtungsimpulse jeweils derart ausgewählt sind, dass für jede erfasste Gegenstandszeile (7a, 7b, 7c, 7d) des Gegenstands (7) jeweils für jeden Farbkanal ein Zeilenbild vorliegt.

14. Aufnahmevorrichtung nach einem der Ansprüche 8 bis 12, **dadurch gekennzeichnet, dass** die Zeilensensoren (1) als Zeilen eines Flächensensors mit rasterförmig angeordneten Pixelsensoren (10; 2a, 2b, 2c) ausgebildet sind, dass die Fördereinheit (5) die Richtung und die Geschwindigkeit des Gegenstands (7) reguliert, sodass dieselbe Gegenstandszeile (7a, 7b, 7c, 7d) bei der Relativbewegung hintereinander auf die in derselben Sensorspalte liegenden Pixelsensoren (10; 2a, 2b, 2c) nebeneinander liegender Zeilensensoren (2) abgebildet sind.

15. Aufnahmevorrichtung nach einem der Ansprüche 8 bis 13, **dadurch gekennzeichnet, dass** zumindest ein Farbkanal (VIS) mehrere Unterkanäle (R, G, B) enthält, wobei jeder Pixelsensor (10; 2a, 2b, 2c) eines jeden Zeilensensors (1 u, 1v) für jeden der Unterkanäle (R, G, B) einen für den jeweiligen Unterkanal (R, G, B) sensitiven Teilpixelsensor (10r, 10g, 10b) aufweist, wobei gegebenenfalls zumindest einer der Teilpixelsensoren (10r, 10g, 10b) eines Pixelsensors (10; 2a, 2b, 2c) für Licht eines weiteren Kanals (IR) sensitiv ist.
